(19) Europäisches Patentamt
European Patent Office
Office européen des brevets

(11) **EP 2 063 630 A1**

(12) **EUROPEAN PATENT APPLICATION**

(43) Date of publication:
**27.05.2009 Bulletin 2009/22**

(51) Int Cl.:
**H04N 5/235** (2006.01)    **H04N 3/15** (2006.01)
**H04N 5/14** (2006.01)

(21) Application number: **07121563.6**

(22) Date of filing: **26.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing**
**92100 Boulogne-Billancourt (FR)**

(72) Inventors:
• **Kervec, Jonathan**
  **92648, Boulogne Cedex (FR)**
• **Guermoud, Hassane**
  **92648, Boulogne Cedex (FR)**
• **Doyen, Didier**
  **92648, Boulogne Cedex (FR)**
• **Auffret, Eric**
  **92648, Boulogne Cedex (FR)**

(74) Representative: **Le Dantec, Claude**
  **46, Quai Alphonse Le Gallo**
  **92100 Boulogne-Billancourt (FR)**

(54) **Video capture device with variable shutter integration time**

(57)    The invention concerns a video capture device (1, 16) comprising an electronic sensor device (11, 3) having a variable shutter integration time ($T_{i,j}$), said electronic sensor device (11, 3) outputting a pixel value ($V_{i,j}$(R,G,B), $V1_{i,j}$(R,G,B), $V2_{i,j}$(R,G,B), $V3_{i,j}$(R,G,B), $V4_{i,j}$(R,G,B), $V'2_{i,j}$(R,G,B), $V'3_{i,j}$(R,G,B), $V'4_{i,j}$(R,G,B)) for each pixel of each captured frame, said video capture device (1, 16). Said video capture device comprises:

Means for determining a motion vector (6, 7, 14) associated with each pixel,

Means for outputting, from said sensor device (11, 3), a pixel value ($V_{i,j}$(R,G,B), $V1_{i,j}$(R,G,B), $V2_{i,j}$(R,G,B), $V3_{i,j}$(R,G,B), $V4_{i,j}$(R,G,B), $V'2_{i,j}$(R,G,B), $V'3_{i,j}$(R,G,B), $V'4_{i,j}$(R,G,B)) at at least one integration time ($T_{i,j}$),

Means for outputting from the video capture device (1, 16) a pixel value ($Vout_{i,j}$) function of the pixel value ($V_{i,j}$(R,G,B), $V1_{i,j}$(R,G,B), $V2_{i,j}$(R,G,B), $V3_{i,j}$(R,G,B), $V4_{i,j}$(R,G,B), $V'2_{i,j}$(R,G,B), $V'3_{i,j}$(R,G,B), $V'4_{i,j}$(R,G,B)) at the output of the sensor device (11, 3) determined at one integration time ($T_{i,j}$) according to the motion vector determined for said pixel.

Fig 2

**Description**

The invention concerns video cameras and more precisely addresses the problem of blurring effect in video cameras.

Today, most of the video cameras have a variable electronic shutter time also called shutter integration period or time. This time can be set in accordance with the environment conditions (night light, day light, high light...) and also with the type of event which has to be recorded (sport event with a lot of motion, news with few motion, film, etc...). For example, for an outdoor sport event, the integration period has to be short to limit the blurring effect on the pixels having high motion: that supposes also that the scene is lighted enough to limit the noise disturbance on the result: the signal on noise ratio is clearly bad on low levels whereas the human eyes is very sensitive to small variations.

In most of the existing cameras, the shutter integration time is set for the entire image and depends mostly on the signal/noise ratio needed at the output of the camera. As today existing HD (standing for High Definition) video cameras are less sensitive than SD (standing for Standard Definition) ones, the shutter integration time is important and set to a higher value than for SD cameras and that even for day light condition.

When the shutter integration time increases, the ratio signal over noise increases also at the output of the camera but the blurring also increases on moving edges.

The present invention proposes to adapt temporally and spatially the integration period to the motion and/or to the signal on noise ratio that has to be achieved.

To this end, the invention concerns a video capture device comprising an electronic sensor device having a variable integration time, the electronic sensor outputting a pixel value for each pixel of each captured frame. According to the invention, the video capture device comprises:

Means for determining a motion vector associated with each pixel,
Means for outputting, from the sensor device, a pixel value at at least one integration time,
Means for outputting from the video capture device a pixel value function of the pixel value at the output of the sensor device determined at one integration time according to the motion vector determined for the pixel.

According to a preferred embodiment, the video capture device comprises:

- means for storing the luminance values of the pixels of at least two consecutive frames,
- means for interpolating the motion vectors associated with the pixels of the current frame from the pixel values of the two previously stored frames,
- means for controlling the shutter integration time for each pixel of the current frame according to the interpolated motion vector.

According to a preferred embodiment, the video capture device comprises means for calculating, from the motion vectors, a motion amplitude for each pixel and that the shutter integration time is calculated as being maximal for low motion amplitude pixels, as being a decreasing linear function of the integration time from the maximal value to a minimal value for average motion amplitude pixels and the minimal value for high motion amplitude pixels.

Preferentially, the maximal and minimal values are determined by the features of the electronic sensor device.

According to a second embodiment, the means for outputting a pixel value at at least one integration time output one pixel value for each pixel at several integration times and the means for outputting from the video capture device a pixel value combine the pixel values obtained at several integration times, the combination being done according to the motion vectors.

According to a preferred embodiment, the combination takes as pixel value the value at lowest integration time for the slow motion pixels and the more the motion vectors increase, the more values at different integration times are added to obtain the pixel value.

According to a preferred embodiment, the means for outputting a pixel value at at least one integration time output one pixel value for each pixel at several integration times and the means for outputting from the video capture device a pixel value take the pixel value at the lowest integration time for slow motion pixels, and the more the motion is important the higher integration time corresponding output value is taken.

Preferentially, according to the integration time, a gain is applied to the output value of the sensor, the gain increasing linearly when the integration time decreases.

In all the embodiments of the invention, the electronic sensor device is of CMOS type.

In some of the embodiments of the invention, given in claims 1, 5 or 6, the electronic sensor device is of CCD type.

Other characteristics and advantages of the invention will appear through the description of a non-limiting embodiment of the invention, which will be illustrated, with the help of the enclosed drawing.

- Figure 1 represents a temporal interpolation for the calculation of motion vectors,
- Figure 2 represents a first embodiment of a device according to the invention,

- Figure 3 represents the variation of the integration time according to the movement amplitude of the pixels in the first embodiment of the invention,
- Figure 4 represents a second embodiment of a device according to the invention,
- Figure 5 represents the pixel voltage output according to the movement amplitude of the pixels in the second embodiment of the invention when the sensor is a CCD sensor or a CMOS sensor, which do not accumulate the values of the pixels.
- Figure 6 represents the pixel voltage output according to the movement amplitude of the pixels in the second embodiment of the invention when the sensor is a CMOS sensor which accumulates the values of the pixels.

Two embodiments of the invention are given in the following lines of the description. Both of them describe as video capture device, a video camera. However, in other embodiments of the invention, one can imagine, without showing any inventive step, other video capture devices such as personal computers....

Embodiments of the present invention may be implemented in software, firmware, hardware or by any combination of various techniques. For example, in some embodiments, the present invention may be provided as a computer program product or software which may include a machine or computer-readable medium having stored thereon instructions which may be used to program a computer (or other electronic devices) to perform a process according to the present invention. In other embodiments, steps of the present invention might be performed by specific hardware component that contain hardwired logic for performing the steps, or by any combination of programmed computer components and custom hardware components.

Thus, a machine-readable medium may include any mechanism for storing or transmitting information in a form readable by a machine (for instance a computer). These mechanisms include, but are not limited to, floppy diskettes, optical disks, hard disk drives, holographic disks, compact disks read-only memory (CD-ROMs), magneto-optical disks, read-only memory (ROMs), random access memory (RAM), Erasable Programmable Read-only memory (EEPROM), magnetic or optical cards, flash memory, a transmission over the Internet, electrical, optical, acoustical or other forms of propagated signals (for instance carrier waves, infrared signals, digital signals, etc), or the like.

Unless specifically stated otherwise as apparent from the following discussion, it is appreciated that discussions utilizing terms such as "processing" or "computing" or "calculating" or "determining" or the like, may refer to the action and processes of a computer system, or similar electronic computing device, that manipulates and transforms data represented as physical quantities within the computer system memories or registers or other such information storage, transmission or display devices.

In the following detailed description of the embodiments, reference is made to the accompanying drawings that show, by way of illustration, specific embodiments in which the invention may be practices. In the drawings, like numeral describe substantially similar components throughout the several views. These embodiments are described in sufficient detail to enable those skilled in the art to practice the invention. Other embodiments may be utilized and structural, logical, and electrical changes may be made without departing from the scope of the present invention. Moreover, it is to be understood that the various embodiments of the invention, although different, are not necessarily mutually exclusive. For example, a particular feature, structure, or characteristic described in one embodiment may be included within other embodiments.

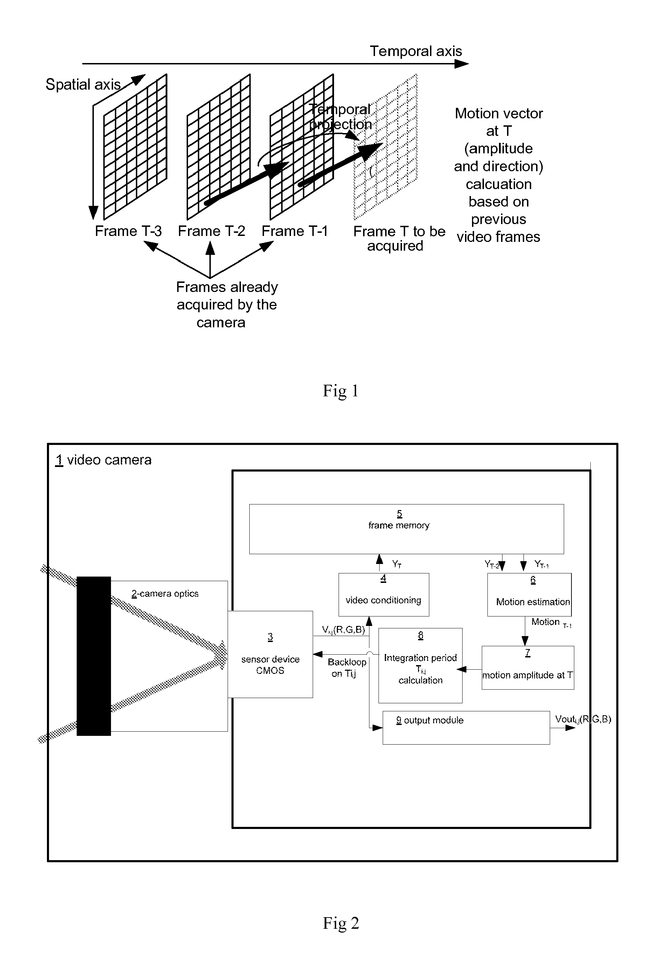

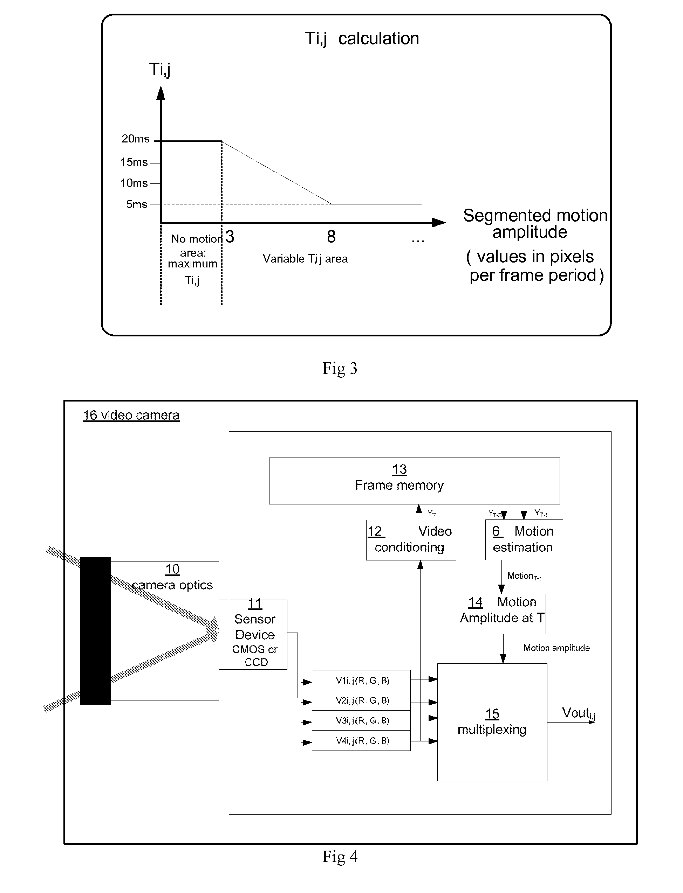

In Figures 2 and 4, the modules represented are functional units which may or may not correspond to physically distinguishable units. For example, these modules or some of them may be grouped together into a single component, for instance a programmable component or an ASIC or constitute functionalities of one and the same piece of software. A contrario, some modules may possibly be composed of separate physical entities.

In reference to figure 2, a pixel voltage value taken at the camera sensor output can be represented by the following equation:

$$Vout_{i,j}(R,G,B) = APER * G_{i,j,T_{i,j}} * V_{i,j,T_{i,j}}(R,G,B),$$

for a pixel of coordinates (i,j) in a frame.

In the two given embodiments of the invention, "Aper" is considered as being a constant. "Aper" represents the aperture of the lens of the camera. It can also be considered as a fixed parameter according to the light conditions.

$G_{i,j}$ represents the gain to be applied to the pixel output voltage depending on the integration time. Indeed, the longer the integration time is, the smaller the gain has to be. The gain $G_{i,j}$ is therefore inversely proportional to the integration time $T_{i,j}$.

$V_{i,j}(R,G,B)$ being the pixel voltage measured by the sensor, for each color component R, G, B. Instead of the R,G,B color space one can also imagine the C(Cyan), M (Magenta), Y (Yellow) color space.

The motion at the camera acquisition level is the combination of the motion of the camera itself and the motion of the objects in the scene. In order to simplify the description of the blurring, the camera is considered as being fixed in both embodiments and it is also considered that the focus is done on a part of the image. Therefore, the present invention does not propose to cancel the blurring due to the focus which is more or less related to some artistic effect but to cancel the blurring effect due to the motion.

Generally speaking, the motion estimation in a video sequence is the technique which leads to define successive fields on motion vectors, at different temporal positions:

- starting with the input video source (projection of a 3D scene on a 2D plan), an estimation of the motion at different spatial and temporal positions is performed: a motion vector defines where does the pixel come and where it goes, particularly, it defines the amplitude of the motion and its direction.
  In the proposed two embodiments, the motion estimator uses previous video frames already captured and stored in the camera, for instance T-1, T-2, in order to define the predicted motion vectors for each pixel of the next frame T which capture is in progress. Figure 1 shows this temporal interpolation.

Figure 2 represents a first embodiment of the invention. This embodiment represents a video camera 1 comprising an optic module 2 having an electronic shutter which has a variable integration time available for one pixel or for a group of pixels.

In this embodiment, the video camera 1 runs as a camera which integration period is motion dependant.

The sensor device 2 is of CMOS (standing for "Complementary Metal Oxide Semi-conductor") type. A CMOS type sensor can output a pixel voltage independently for each pixel and therefore can take the benefit of an optic having a variable integration period.

The sensor device 2 outputs a pixel value $V_{i,j}$ (R,G,B) for each pixel captured and takes as input the integration time $T_{i,j}$ calculated by a module 8. Therefore, for each pixel, the sensor device 2 has a variable integration time which depends on the motion that is interpolated for this pixel. This is detailed in the below paragraphs.

We are now going to describe how the movement of the pixels is calculated in order to generate the integration time as described on figure 3.

Back to figure 2, the sensor device 3 is connected to a video conditioning module 4. The video conditioning module 4 receives from the sensor device 3 the output voltage $V_{i,j}$(R,G,B) for each pixel.

The video conditioning module 4 generates a luminance $Y_T$ value for each pixel from the color components received. The luminance is calculated according to the following equation:

$$Y_T = 0.299 * V_{i,j,T_{i,j}}(R) + 0.587 * V_{i,j,T_{i,j}}(G) + 0.114 * V_{i,j,T_{i,j}}(B)$$

The video conditioning module output is connected to a frame memory 5. This frame memory is of DDR (standing for Double-Data Rate) type but can be of other types in other embodiments. The shared access to the DDR memory 5 can be controlled by a processor but can also be controlled by a hardware mechanism implemented in one of the module or in an external module not represented on figure 2.

This frame memory 5 stores the pixel values of the frames, the pixel values being the luminance for each pixel of a frame. At least two frames need to be stored in the DDR memory 5 for being able to carry out the motion estimation. Therefore the size of the DDR has to be big enough for storing three frames, the current frame and the two previous frames. Other data can also be stored in this DDR memory 5.

A motion estimation module 6 is also linked to the DDR memory 5. This module estimates the movement of the pixels of the frame at instant T-1 from the values of the pixels at instant T-1 and T-2. These last two frames are stored in the frame memory 5. The motion estimation module 6 is a module estimation module as known by the man skilled in the art. Different kinds of motion estimation modules can be used. A preferred one is the pel-recursive (standing for pixel recursive) motion estimator. This motion estimator outputs a motion vector for each pixel of the current frame.

The motion estimation module 6 outputs a motion vector for each pixel of the frame at instant T-1. A motion amplitude module 7 receives the motion vector for each pixel of the frame at instant T-1 and makes a temporal interpolation of these motion vectors to calculate the motion vectors at instant T and calculates the amplitude of each of the motion vectors at instant T, i.e for the current frame. The amplitude is calculated as being the norm of the motion vector.

A module 8 receives the motion amplitude for each pixel and calculates the integration time $T_{i,j}$ for this pixel. The integration period or time is a direct function of the movement for each pixel and follows the curve given in figure 3. Figure 3 represents the evolution of the integration time according to the movement for each pixel to be captured by the sensor.

On figure 3, the integration time is coded on a predetermined number of bits (for instance 8 bits), determined by the CMOS sensor device 2 characteristics and can take values comprised between 5 and 20 ms. In other embodiments, one can have more or less values and the integration time can also be lower (lower than 5ms) or higher (more than 20ms). When the detected movement is low, the integration time has to be higher than when the movement is high.

For motion amplitude lower than 3 or equal to 3 pixels per frame, the integration period is set to 20ms, which is the highest value that can be supported by the camera sensor 2. When the motion amplitude is higher than 3 and lower than 8, the integration time decreases linearly until it reaches the minimum value supported by the camera sensor 2, which is in our embodiment 5ms. For a motion amplitude higher than 8, the integration time is set to the minimum value 5ms.

Therefore, for each pixel of frame at instant T, a given integration time is calculated by module 8 and transmitted to the sensor device 3. According to this value, the sensor device modifies the integration time for each pixel. A pixel voltage is therefore obtained for each pixel, the pixel voltage being obtained for a given integration time and transmitted to an output module 9 which calculates the output value of each pixel according to the output of the sensor, the integration time and the gain according to the following formula already given above.

$$Vout_{i,j}(R,G,B) = APER * G_{i,j,T_{i,j}} * V_{i,j,T_{i,j}}(R,G,B)$$

Figure 4 represents a second embodiment of the invention.

In this second embodiment, a video camera 16 is a camera having a CCD sensor or a CMOS sensor device 11. A CMOS sensor can have a variable shutter integration time per pixel or per frame whereas a CCD sensor has only a global variable shutter integration time per frame.

In this second embodiment, we will use the property of the CMOS and of the CCD which is to have a variable shutter integration time per frame.

The video camera 16 runs nearly as a slow motion video camera, which has the possibility to calculate more than one output voltage per pixel per frame period. In this embodiment, the integration time $T_{i,j}$ is also motion dependant but for each pixel, all the pixel voltages are calculated for each integration time, (four different integration times in this embodiment), and afterwards, according to the motion calculated, only one value per pixel is kept.

In this embodiment, the frame period is 20ms and the sensor outputs four values per pixel, one each 5 ms during these 20ms. So, an internally 200Hz video is used to generate a 50Hz output.

Four $V_{i,j}(R,G,B)$ signals are captured by the sensor device 11 per pixel and per frame, $V1_{i,j}(R,G,B)$ for the sub-frame at 5 ms, $V2_{i,j}(R,G,B)$ for the sub-frame at 10ms, $V3_{i,j}(R,G,B)$ for the sub-frame at 15ms, $V4_{i,j}(R,G,B)$ for the sub-frame at 20ms.

The output of the sensor device 11 is connected to an input of a video conditioning device 12. The video conditioning device outputs a luminance value $Y_T$ from the pixel values of the plurality of sub-frames. The luminance is calculated as a function of the pixel voltage according to the different color components.

The luminance value is taken as a function of the RGB value at the output of the sensor obtained for the highest integration time. In other embodiments, one can choose to select the value at another integration time, or a combination of the output values at different integration times. As in the preferred embodiment, the sensor does not accumulate the values at each integration time, the sum of the values at the different integration time has to be done to obtain the value at the highest integration time.

$$Y_T = 0.299 * (V4_{i,j}(R) + V3_{i,j}(R) + V2_{i,j}(R) + V1_{i,j}(R))$$
$$+ 0.587 * (V4_{i,j}(G) + V3_{i,j}(G) + V2_{i,j}(G) + V1_{i,j}(G))$$
$$+ 0.114 * (V4_{i,j}(B) + V3_{i,j}(B) + V2_{i,j}(B) + V1_{i,j}(B))$$

The video conditioning output is connected to a frame memory 13 of DDR type.

The frame memory 13 stores the luminance value of each pixel of each frame. Permanently, three whole frames are stored in the frame memory 13.

The shared access to the DDR memory 13 can be controlled by a processor but can also be controlled by a hardware mechanism implemented in one of the module or in an external module not represented on figure 2.

The frame memory 13 is also connected to a motion estimation module 6.
The motion estimation module 6 has been described in reference to figure 2. The motion estimation module 6 outputs a motion vector for each pixel of the frame at instant T-1. A motion amplitude module 14 receives the motion vectors for each pixel of the frame at instant T-1 and makes a temporal interpolation of these motion vectors to calculate the motion vectors at instant T and calculates the amplitude of each of the motion vectors at instant T, i.e for the current frame. The amplitude is calculated as being the norm of the motion vector.
The motion amplitude is sent to a multiplexing module 15 which calculates the pixel value for each pixel of the current frame at instant T following the below explanations.
The multiplexer module 15 receives also as input the values of the pixel voltage for each of the sub-frame.
As in the first embodiment, a pixel voltage value taken at the video camera 16 output can be represented by the following equation:

$$Vout_{i,j}(R,G,B) = APER * G_{i,j,T_{i,j}} * Vext_{i,j}(R,G,B)$$

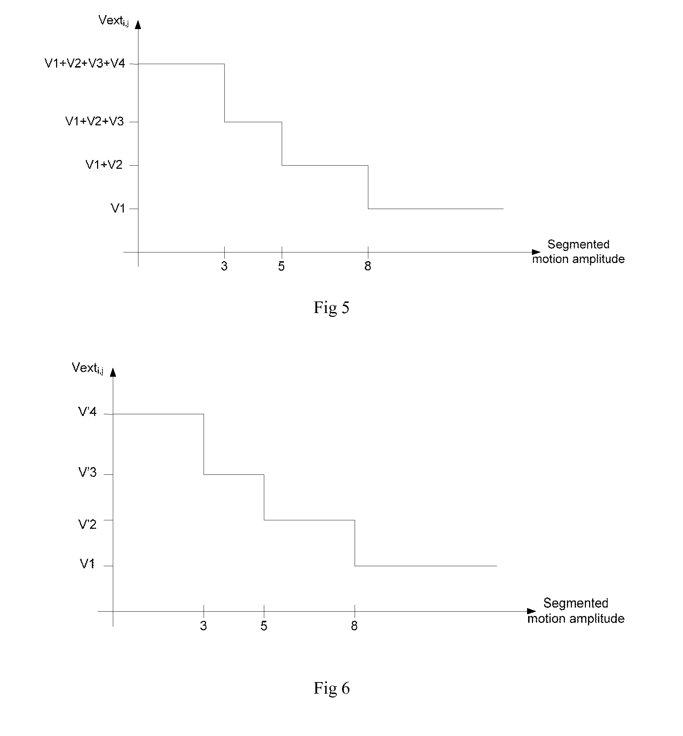

As in the first embodiment of the invention, "Aper" is considered as being a constant. "Aper" represents the aperture of the lens of the video camera 16. It can also be considered as a fixed parameter according to the light conditions.
$G_{i,j}$ represents the gain to be applied to the pixel output voltage depending on the integration time. Indeed, the longer the integration time is, the smaller the gain has to be. The gain $G_{i,j}$ is therefore inversely proportional to the integration time $T_{i,j}$.
$Vext_{i,j}$ is represented on figure 5 and depends on the movement amplitude detected for each pixel when the sensor is of CMOS type or CCD type and does not accumulate the values from one sub-frame to the other but that the sensor value is reset after each sub-frame. The CCD sensor behaves always like this, the CMOS sensor can behave according to another mode, figure 6 illustrates this variant.
According to the movement amplitude, $Vext_{i,j}$ will take from one value up to 4 values taken at four different instants, calculated inside the multiplexing module 15:

-    one value for the fast motion, fast motion being a motion which amplitude is higher than 8 pixels per frame period.

$$Vext_{i,j} = V1_{i,j}$$

-    two values for the middle motion, middle motion being a motion amplitude between 5 and 8 pixels per frame period.

$$Vext_{i,j} = V1_{i,j} + V2_{i,j}$$

-    three values for the slow motion, slow motion being a motion amplitude between 3 and 5 pixels per frame period.

$$Vext_{i,j} = V1_{i,j} + V2_{i,j} + V3_{i,j}$$

-    four values for no motion, no motion being considered between 0 and 3 pixels per frame period.

$$Vext_{i,j} = V1_{i,j} + V2_{i,j} + V3_{i,j} + V4_{i,j}$$

$G_{i,j}$ represents the gain to be applied to compensate the integration time and takes the following values for the different values of $Vext_{i,j}$.
-    for the fast motion,

$$G_{i,j} = 4$$

- for the middle motion,

$$G_{i,j} = 2$$

- for the slow motion,

$$G_{i,j} = 4/3$$

- for no motion.

$$G_{i,j} = 1$$

So at the output of the camera, the pixel voltage is the following:

- for the fast motion,

$$Vout_{i,j}(R,G,B) = 4 * Aper * V1_{i,j}(R,G,B)$$

- for the middle motion,

$$Vout_{i,j}(R,G,B) = 2 * Aper * (V1_{i,j}(R,G,B) + V2_{i,j}(R,G,B))$$

- for the slow motion,

$$Vout_{i,j}(R,G,B) = 4/3 * Aper * (V1_{i,j}(R,G,B) + V2_{i,j}(R,G,B) + V3_{i,j}(R,G,B))$$

- for no motion.

$$Vout_{i,j}(R,G,B) = Aper * (V1_{i,j}(R,G,B) + V2_{i,j}(R,G,B) + V3_{i,j}(R,G,B) + V4_{i,j}(R,G,B))$$

The CMOS sensor can also behave according to a variant and accumulates automatically the values taken at the different instants, therefore there is no need to accumulate the values in such a mode, as done in the above formula. This is represented on figure 6. Four $V_{i,j}(R,G,B)$ signals are captured by the sensor device 11 per pixel and per frame, $V1_{i,j}(R,G,B)$ for the sub-frame at 5 ms, $V'2_{i,j}(R,G,B)$ for the sub-frame at 10ms, $V'3_{i,j}(R,G,B)$ for the sub-frame at 15ms, $V'4_{i,j}(R,G,B)$ for the sub-frame at 20ms.
The luminance value is taken as a function of the RGB value at the output of the sensor obtained for the highest integration time. In other embodiments, one can choose to select the value at another integration time, or a combination of the output values at different integration times. As in this variant, the sensor accumulates the values at each integration time, the luminance is obtained according to the following formula:

$$Y_T = 0.299 * V'4_{i,j}(R) + 0.587 * V'4_{i,j}(G) + 0.114 * V'4_{i,j}(B)$$

According to the movement amplitude, Vext$_{i,j}$ will take the following values, calculated inside the multiplexing module 15:

- V1$_{i,j}$ for the fast motion, fast motion being a motion which amplitude is higher than 8 pixels per frame period.

$$Vext_{i,j} = V1_{i,j}$$

- V'2$_{i,j}$ for the middle motion, middle motion being a motion amplitude between 5 and 8 pixels per frame period.

$$Vext_{i,j} = V'2_{i,j}$$

- V'3$_{i,j}$ for the slow motion, slow motion being a motion amplitude between 3 and 5 pixels per frame period.

$$Vext_{i,j} = V'3_{i,j}$$

- V'4$_{i,j}$ for no motion, no motion being considered between 0 and 3 pixels per frame period.

$$Vext_{i,j} = V'4_{i,j}$$

So at the output of the video camera 16, the pixel voltage is the following:

- for the fast motion,

$$Vout_{i,j}(R,G,B) = 4 * Aper * V1_{i,j}(R,G,B)$$

- for the middle motion,

$$Vout_{i,j}(R,G,B) = 2 * Aper * V'2_{i,j}(R,G,B)$$

- for the slow motion,

$$Vout_{i,j}(R,G,B) = 4/3 * Aper * V'3_{i,j}(R,G,B)$$

- for no motion.

$$Vout_{i,j}(R,G,B) = Aper * V'4_{i,j}(R,G,B)$$

Therefore, in this second embodiment represented by figure 4, figures 5 and 6, the integration time of the shutter is also dependant on the motion but does not influence directly the output of the sensor. The output of the sensor always output four values for each pixel and afterwards, according to the motion estimation, a combination of the values outputted by the sensor is used to calculate the output value for each pixel.

In the given embodiments of the invention, the granularity is set to the pixel level. However, for simplicity reasons, the granularity can be set to block level, a block can contain a plurality of pixels. In such a case, one integration time can be common for several pixels. This can be done with a sensor of CMOS type.

## Claims

1. Video capture device (1, 16) comprising an electronic sensor device (11, 3) having a variable shutter integration time ($T_{i,j}$), said electronic sensor device (11, 3) outputting a pixel value ($V_{i,j}(R,G,B)$, $V1_{i,j}(R,G,B)$, $V2_{i,j}(R,G,B)$, $V3_{i,j}(R,G,B)$, $V4_{i,j}(R,G,B)$, $V'2_{i,j}(R,G,B)$, $V'3_{i,j}(R,G,B)$, $V'4_{i,j}(R,G,B)$) for each pixel of each captured frame, said video capture device (1, 16) being **characterized in that** it comprises

   Means for determining a motion vector (6, 7, 14) associated with each pixel,
   Means for outputting, from said sensor device (11, 3), a pixel value ($V_{i,j}(R,G,B)$, $V1_{i,j}(R,G,B)$, $V2_{i,j}(R,G,B)$, $V3_{i,j}(R,G,B)$, $V4_{i,j}(R,G,B)$, $V'2_{i,j}(R,G,B)$, $V'3_{i,j}(R,G,B)$, $V'4_{i,j}(R,G,B)$) at at least one integration time ($T_{i,j}$),
   Means for outputting from the video capture device (1, 16) a pixel value ($Vout_{i,j}$) function of the pixel value ($V_{i,j}(R,G,B)$, $V1_{i,j}(R,G,B)$, $V2_{i,j}(R,G,B)$, $V3_{i,j}(R,G,B)$, $V4_{i,j}(R,G,B)$, $V'2_{i,j}(R,G,B)$, $V'3_{i,j}(R,G,B)$, $V'4_{i,j}(R,G,B)$) at the output of the sensor device (11, 3) determined at one integration time ($T_{i,j}$) according to the motion vector determined for said pixel.

2. Video capture device according to claim 1 **characterized in that** said device comprises

   - means for storing the luminance values($Y_T$) of the pixels of at least two consecutive frames (T-1, T-2),
   - means for interpolating the motion vectors associated with the pixels of the current frame (T) from the pixel values of the two previously stored frames (T-1, T-2),
   - means for controlling the variable shutter integration time ($T_{i,j}$) for each pixel of the current frame (T) according to said interpolated motion vector.

3. Video capture device according to claim 2 **characterized in that** it comprises means (7, 14) for calculating, from said motion vectors, a motion amplitude for each pixel and the variable shutter integration time ($T_{i,j}$) is calculated as being maximal for low motion amplitude pixels, as being a decreasing linear function of said variable shutter integration time ($T_{i,j}$) from said maximal value to a minimal value for average motion amplitude pixels and said minimal value for high motion amplitude pixels.

4. Video capture device according to claim 3 **characterized in that** said maximal and minimal values are determined by the features of said electronic sensor device (11,3).

5. Video capture device according to claim 1 **characterized in that** the means for outputting a pixel value ($V1_{i,j}(R,G,B)$, $V'2_{i,j}(R,G,B)$, $V'3_{i,j}(R,G,B)$, $V'4_{i,j}(R,G,B)$) at at least one variable shutter integration time ($T_{i,j}$) output one pixel value for each pixel at several integration times ($T_{i,j}$) and the means for outputting from the video capture device (1, 16) a pixel value combine the pixel values obtained at several integration times ($T_{i,j}$), said combination being done according to said motion vectors.

6. Video capture device according to claim 5 **characterized in that** the combination takes as pixel value ($Vout_{i,j}$) the value at lowest variable shutter integration time ($T_{i,j}$) for the slow motion pixels and the more the motion vectors increase, the more values at different variable shutter integration times ($T_{i,j}$) are added to obtain the pixel value.

7. Video capture device according to claim 1 **characterized in that** the means for outputting a pixel value at at least one variable shutter integration time ($T_{i,j}$) output one pixel value ($V1_{i,j}(R,G,B)$, $V'2_{i,j}(R,G,B)$, $V'3_{i,j}(R,G,B)$, $V'4_{i,j}(R,$

G,B) for each pixel at several shutter integration times ($T_{i,j}$) and the means for outputting from the video capture device (1, 16) a pixel value ($Vout_{i,j}$) take the pixel value ($V1_{i,j}(R,G,B)$) at the lowest shutter integration time ($T_{i,j}$) for slow motion pixels, and the more the motion is important the higher shutter integration time ($T_{i,j}$) corresponding output value is taken.

8. Video capture device according to any of the previous claims **characterized in that** according to the variable shutter integration time ($T_{i,j}$), a gain ($G_{i,j,Ti,j}$) is applied to the output value of the sensor device (3, 11), the gain ($G_{i,j,Ti,j}$) increasing linearly when the variable shutter integration time ($T_{i,j}$) decreases.

9. Video capture device according to any of the previous claims **characterized in that** the electronic sensor device (3,11) is of CMOS type.

10. Video capture device according to any of claims 1, 5 or 6 **characterized in that** the electronic sensor device (11) is of CCD type.

Spatial axis

Temporal axis

Temporal projection

Frame T-3    Frame T-2    Frame T-1    Frame T to be acquired

Motion vector at T (amplitude and direction) calcuation based on previous video frames

Frames already acquired by the camera

Fig 1

Fig 2

## Ti,j calculation

Ti,j

20ms
15ms
10ms
5ms

No motion area: maximum Ti,j

3    8    ...

Variable Tij area

Segmented motion amplitude

( values in pixels per frame period )

Fig 3

16 video camera

13
Frame memory

12    Video conditioning

6    Motion estimation

$Y_T$

$Y_{T-2}$    $Y_{T-1}$

$Motion_{T-1}$

10
camera optics

11
Sensor Device
CMOS or CCD

14    Motion Amplitude at T

Motion amplitude

V1i,j(R,G,B)

V2i,j(R,G,B)

V3i,j(R,G,B)

V4i,j(R,G,B)

15
multiplexing

$Vout_{i,j}$

Fig 4

Fig 5

Fig 6

**European Patent Office**

Application Number

EP 07 12 1563

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 838 088 A (SONY CORP [JP]) 26 September 2007 (2007-09-26) * paragraph [0021] - paragraph [0034] * * paragraph [0038] * ----- | 1-4,8-10 | INV. H04N5/235 H04N3/15 H04N5/14 |
| X | US 2007/092244 A1 (PERTSEL SHIMON [US] ET AL) 26 April 2007 (2007-04-26) * paragraph [0035] - paragraph [0038] * * paragraph [0042] - paragraph [0046] * ----- | 1-4,8-10 | |
| X | US 2007/071344 A1 (OUZILEVSKI ALEXEI V [US] ET AL) 29 March 2007 (2007-03-29) * paragraphs [0074] - [0080] * ----- | 5-10 | |

TECHNICAL FIELDS
SEARCHED        (IPC)

H04N

The present search report has been drawn up for all claims

| Place of search | Date of completion of the search | Examiner |
|---|---|---|
| Munich | 16 April 2008 | Penchev, Petyo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                            
& : member of the same patent family, corresponding
document

EPO FORM 1503 03.82 (P04C01)

European Patent
Office

Application Number

EP 07 12 1563

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**European Patent Office**

**LACK OF UNITY OF INVENTION**
**SHEET B**

Application Number

EP 07 12 1563

The Search Division considers that the present European patent application does not comply with the requirements of unity of invention and relates to several inventions or groups of inventions, namely:

    1. claims: 1-4, 8-10 (part)

        directed to a motion blur removing apparatus controlling the exposure time for each pixel based on  motion estimation;

    1.1. claims: 5, 6, 7, 8-10 (part)

        directed to a motion blur removing apparats for controlling for each pixel the sum of frames based on a respective motion vector;

                    ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 07 12 1563

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2008

| Patent document cited in search report | | | Publication date | Patent family member(s) | | | Publication date |
|---|---|---|---|---|---|---|---|
| EP | 1838088 | A | 26-09-2007 | AU | 2005324643 | A1 | 20-07-2006 |
| | | | | CA | 2593719 | A1 | 20-07-2006 |
| | | | | CN | 101099381 | A | 02-01-2008 |
| | | | | JP | 2006197192 | A | 27-07-2006 |
| | | | | WO | 2006075463 | A1 | 20-07-2006 |
| | | | | KR | 20070102678 | A | 19-10-2007 |
| US | 2007092244 | A1 | 26-04-2007 | WO | 2007097808 | A2 | 30-08-2007 |
| US | 2007071344 | A1 | 29-03-2007 | NONE | | | |

For more details about this annex : see Official Journal of the European Patent Office, No. 12/82